# EUROPEAN PATENT SPECIFICATION

(11) **EP 3 826 148 B1**
(45) Date of publication and mention of the grant of the patent: **10.05.2023**
(21) Application number: 18926789.1
(22) Date of filing: 17.07.2018
(51) Int. Cl.: H02K 5/20, H02K 9/06, H02K 11/33, H02K 3/50, H02K 9/19

(54) **ROTATING ELECTRIC MACHINE**
ELEKTRISCHE DREHMASCHINE
MACHINE ÉLECTRIQUE TOURNANTE

(43) Date of publication of application: 26.05.2021
(73) Proprietor: Mitsubishi Electric Corporation, Tokyo 100-8310 (JP)
(72) Inventor: TAHARA, Jun, Tokyo 100-8310 (JP); NOSE, Shinya, Tokyo 100-8310 (JP); KATO, Masaki, Tokyo 100-8310 (JP); SHIMANO, Tomoaki, Tokyo 100-8310 (JP); KASHIHARA, Toshiaki, Tokyo 100-8310 (JP)
(74) Representative: Hoffmann Eitle
(86) International application number: PCT/JP2018/026631
(87) International publication number: WO 2020/016911

(56) References cited:
- EP-A1- 1 722 463
- DE-A1-102011 087 602
- JP-A- 2004 274 992
- JP-A- 2013 102 591
- JP-A- 2014 143 833
- JP-A- 2016 042 770
- JP-A- 2017 221 083
- US-A1- 2014 203 675
- US-A1- 2014 265 664
- US-A1- 2015 042 213

## Description

### Technical Field

The present invention relates to a rotary electric machine, to be mounted on a vehicle or the like, in which a rotary electric machine main body and an electric power conversion device are integrated.

### Background Art

A rotary electric machine for vehicle is provided with a rotary electric machine main body and a control device. The control device supplies power to the rotary electric machine main body, and sends/receives signals to/from the rotary electric machine main body. From a viewpoint of saving space, improving moutability, and reducing a size of a wire harness connecting a rotary electric machine main body with a control device, a rotary electric machine, in which the rotary electric machine main body and the control device are integrated, has been developed.

In a rotary electric machine disclosed in patent document 1, a control device is integrated on an anti-load side of a rotary electric machine main body. A cooling air is taken into a heat sink in a radial direction by a fan provided at a shaft end of a rotor. Then, the cooling air flows along a fin formed in the heat sink, flows into an inside of the rotary electric machine main body through a ventilation hole of a rear housing, is turned by the fan, and is discharged to the outside of the rear housing.

### Citation List

### Patent Literature

[PTL 1] JP 4229947 B
JP 2013 102591 A discloses a rotary electric machine including a reflux preventing member having a through hole wherein an input/output lead is guided to form the inverter power circuit. Further rotary electric machines are disclosed in US2015/042213A1, JP 2004 274992 A, US 2014/203675 A1, DE 10 2011 087602 A1, US 2014/265664 A1 and EP 1 722 463 A1.

### Summary of Invention

### Technical Problem

In the rotary electric machine disclosed in patent document 1, a cooling air is taken into the heat sink of a power unit of the control device from outside in the radial direction by the fan arranged at the shaft end of the rotor. Then, there is a problem that a foreign substance such as a screw may enter into a space between the heat sink and the rear housing from outside in the radial direction, go through the ventilation hole of the rear housing, and reach a rotating part in the rotary electric machine main body.

The present invention has been made to solve the problem described above and has an object to provide a rotary electric machine that can suppress entrance of a foreign substance into the rotary electric machine main body.

### Solution to Problem

The present invention is defined in the appended claim 1. Embodiments of the invention are given in the dependent claims.

### Advantageous Effects of Invention

In the rotary electric machine according to the present invention, because the space between the cover and the load side bracket is blocked by the blocking member, it becomes possible to prevent a foreign substance from entering into the inside of the rotary electric machine main body through the inlet port formed in the anti-load side bracket.

### Brief Description of Drawings

[FIG. 1] FIG. 1 is a diagram depicting a single-sided cross section of a rotary electric machine according to a first example explaining the background of the invention.
[FIG. 2] FIG. 2 is a diagram depicting a cross section of a main part of a rotary electric machine according to a second example explaining the background of the present invention.
[FIG. 3] FIG. 3 is a diagram depicting a cross section of a main part of a rotary electric machine according to a third example explaining the background of the present invention.
[FIG. 4] FIG. 4 is a diagram depicting a cross section of a main part of a rotary electric machine according to a fourth example explaining the background of the present invention.
[FIG. 5] FIG. 5 is a diagram depicting a cross section of a main part of a rotary electric machine according to an embodiment of the present invention.
[FIG. 6] FIG. 6 is a diagram depicting a cross section of a main part of a rotary electric machine according to a fifth example explaining the background of the present invention. Description of examples to explain the background of the invention and of an embodiment in accordance with the present invention

### First example

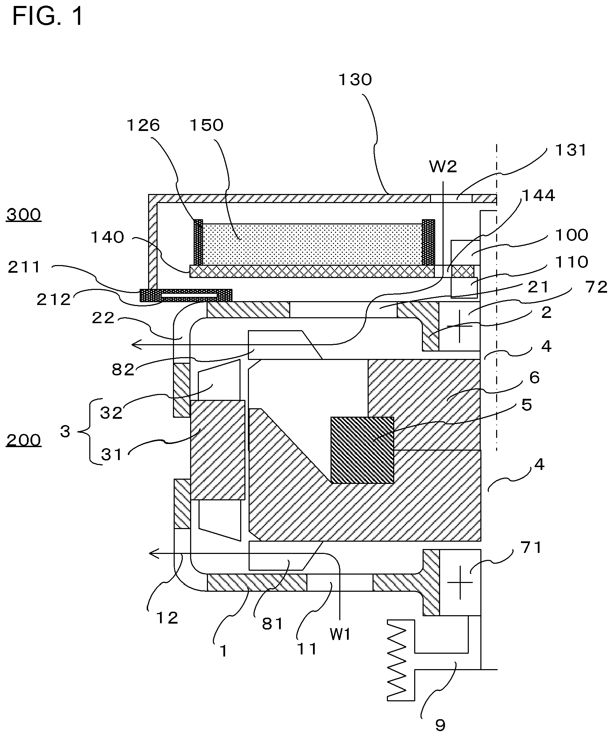

FIG. 1 is a diagram depicting a single-sided cross-section of a rotary electric machine according to a first example explaining the background and not being part of the invention.

FIG. 1 shows that the rotary electric machine includes a rotary electric machine main body 200; and an electric power supplying device 300, arranged, as an electric power conversion device, on an anti-load side of the rotary electric machine main body 200, so that the electric power supplying device 300 and the rotary electric machine main body 200 are arranged in one line along an axial direction. The rotary electric machine is installed so that the axial direction of the rotary electric machine main body 200 is set to be the vertical direction, and that the electric power supplying device 300 is located in an upper part of the rotary electric machine.

The rotary electric machine main body 200 includes a housing having a front bracket 1, which is a load side bracket, and a rear bracket 2, which is an anti-load side bracket; a stator 3 having a stator core 31 and a stator winding 32; and a rotor 6 having a shaft 4 and a field winding 5.

The front bracket 1 is manufactured in a bowl shape having a bottom portion and a cylindrical portion from metallic material such as iron. The bottom portion of the front bracket 1 is provided with a bearing 71 at a central position of the axis. A plurality of inlet ports 11 are formed in the bottom portion of the front bracket 1 so as to surround the bearing 71. Furthermore, a plurality of exhaust ports 12 are formed on a whole circumference of the cylindrical portion of the front bracket 1.

The rear bracket 2 is manufactured in a bowl shape having a bottom portion and a cylindrical portion from metallic material such as iron. The bottom portion of the rear bracket 2 is provided with a bearing 72 at a central portion of the axis of the rotary electric machine. A plurality of inlet ports 21 are formed in the bottom portion of the rear bracket 2 so as to surround the bearing 72. Furthermore, a plurality of exhaust ports 22 are formed on a whole circumference of the cylindrical portion of the rear bracket 2.

The stator 3 includes the stator core 31 having an annular shape, and the stator winding 32 attached to the stator core 31. The stator core 31 is held by an opening edge portion of bowl structure of the front bracket 1 and an opening edge portion of bowl structure of the rear bracket 2 from both sides in the axial direction, and thereby the stator 3 is fixed in the housing.
According to the above-described configuration, the exhaust ports 12 and 22 are arranged outside coil ends of the stator winding 32 in the radial direction.

The shaft 4 is supported by the bearing 71 provided in the front bracket 1 and the bearing 72 provided in the rear bracket 2, and thereby the rotor 6 is rotatably stored in the housing. According to the above-described configuration, the rotor 6 is arranged coaxially with the stator 3 via a small gap to the stator 3 on an inner diameter side of the stator 3. The inlet ports 11 and 12 are arranged so as to face the rotator 6 in the axial direction.

The fan 81 is fixed to a front side end surface of the rotor 6, which is a load side of the rotor 6 in the axial direction. Moreover, the fan 82 is fixed to a rear side end surface of the rotor 6, which is an anti-load side of the rotor 6 in the axial direction. A pulley 9 is provided at a load side end portion of the shaft 4, which protrudes from the front bracket 1 toward the front side. The pulley 9 is connected to a rotation axis of an engine via a belt (not shown). According to the above-described configuration, rotational energy is transferred between the engine and the rotary electric machine main body 200.

The electric power supplying device 300 includes an inverter circuit unit 150 including a plurality of semi-conductor switching elements; a control board 151 provided with an CPU for controlling driving of the inverter circuit unit 150, and the like; a brush 100; a rotation sensor 110; a cover 130 and the like. The electric power supplying device 300 converts direct current voltage supplied from an external power source, such as a battery, into alternate current voltage, and supplies the alternate current voltage to the stator winding 32, and supplies direct current voltage from the external power source to the field winding 5.

The inverter circuit unit 150 is fixed to a surface of the heat sink 140 within a region surrounded by a casing 126. In the inverter circuit unit 150 in this state, the semiconductor switching elements are connected to a metallic substrate formed of aluminum, copper or the like, or a ceramic substrate, via solder or the like. According to the above-described configuration, electric insulation between the inverter circuit unit 150 and the heat sink 140 is secured. Thus, when a heat-transfer material, such as grease or adhesive agent, is used for fixing the substrate in the inverter circuit unit 150, to which the semiconductor switching elements are connected, to the heat sink 140, it is possible to make the heat-transfer material thin. Moreover, a conductive material, such as solder, may be used for fixing the substrate in the inverter circuit unit 150, to which the semiconductor switching elements are connected, to the heat sink 140.

On the other hand, a lead frame of the inverter circuit unit 150 is fixed to the heat sink 140 via a heat transfer material, such as sheet shaped adhesive agent or gel-type adhesive agent. According to the above-described configuration, a fixing member and a joining process can be omitted, and thermal resistance of a fixing portion can be reduced. When the lead frame and the heat sink 140 have the same electric potential, the lead frame can be fixed to the heat sink via a member, such as solder, a spring, or a screw. Thus, not only the thermal resistance of the fixing portion can be reduced, but also fixing reliability at high temperature can be enhanced.

The control board 151 is attached to the surface of the heat sink 140 within the region surrounded by the casing 126. Then, the inverter circuit unit 150 and the control board 151 are embedded in a potting material filled in the case 126. According to the above-described configuration, waterproofing performance, dustproof performance and vibration proof performance of the inverter circuit unit 150 and the control board 151 are improved.

The heat sink 140 with the inverter circuit unit 150 and the control board 151 attached on its surface is arranged on the rear side of the rotary electric machine main body 200 so as to face the bottom portion of the rear bracket 2, and fixed to the rear bracket 2 via the fixing member.

The brush 100 is arranged on the rear side of the rear bracket 2 so as to come into contact with an anti-load side end portion of the shaft 4 that protrudes on the rear side of the rear bracket 2. The rotation sensor 110 is arranged on the anti-load side end portion of the shaft 4 that protrudes on the rear side of the rear bracket 2. The rotation sensor 110 includes hall elements, resolvers and the like.

The cover 130 is formed in a bowl shape having a bottom portion 130a and a cylindrical portion 130b. The cover is arranged so as to cover the heat sink 140, to which the inverter circuit unit 150 and the control board 151 are attached from the rear side, the brush 100, the rotation sensor 110 and the like, and fixed to the rear bracket 2. According to the above-described configuration, electronic parts are protected from water, dust and the like. When the case 126 and the cover 130 are made of resin, electric insulation is secured and the weight is reduced. When the case 126 and the cover 130 are made of metal, an effect of heat dissipation can be obtained.

A suction hole 144 is provided in the heat sink 140 on an inner diameter side of the position where the casing 126 is attached to the heat sink 140. Moreover, a suction hole 131 is formed in the bottom portion 130a of the cover 130, so that the suction hole 131 is located on the rear side of the suction hole 144.

The electric power supplying device 300 and the stator winding 32 are electrically connected to each other via a bus bar 212. The bus bar 212 is insert molded and is integrated with resin. An insert-molded article 210 is a composite part, in which the bus bar 212 is integrated with molded resin 211. According to the above-described configuration, waterproof performance of the bus bar 212 is improved, and electric insulation between the bus bar 212 and members with different potentials, such the rear bracket 2, the heat sink 140 or the like is secured. The insert-molded article 210 of the bus bar 212 is attached to the rear bracket 2 via a screw or the like. Then, the insert-molded article 210 protrudes from the rear bracket 2 on an outer diameter side of the rear bracket 2, and comes into touch with the opening edge portion of the cylindrical portion 130b of the cover 130. The insert-molded article 210 is arranged at a position at which the insert-molded article 210 is exposed to cooling air to be exhausted from the exhaust port 22 of the rear bracket 2.

In the following, a cooling operation of the rotary electric machine, described as above, will be described. When the rotor 6 is rotatively driven, the fans 81, 82 are rotatively driven interlockingly with the rotor 6. According to the above-described configuration, as indicated by an arrow shown in FIG. 1, a cooling air W1 is sucked into the front bracket 1 through the inlet port 11, sent in a centrifugal direction by the fan 81. Then, the cooling air W1 cools the rotor 6 and the stator 3, and is exhausted from the exhaust port 12. A cooling air W2 is sucked into the cover 130 through the suction hole 131, and flows into the rear bracket 2 side through the suction hole 144. According to the above-described structure, the brush 100 and the rotation sensor 110 are cooled by the cooling air W2. The cooling air W2, which flows into the rear bracket 2 side, flows along a surface of the heat sink 140 on the side of the rear bracket 2, and flows into the rear bracket 2 through the inlet port 21. Then, the cooling air W2 is sent in the centrifugal direction by the fan 82, cools the rotor 6 and the stator 3, and is exhausted from the exhaust port 22.

According to the above-described configuration, the brush 100 and the rotation sensor 110 are exposed to the cooling air W2, and an increase in the temperature of the brush 100 due to friction with the shaft 4 is suppressed. Thus, a lifetime of the brush 100 is prolonged. Moreover, because the rotation sensor 110 is cooled, an increase in temperature of the rotation sensor 110 is suppressed.

In the present example, the suction hole 131 in the cover 130 is formed near the center of the bottom portion 130a of the cover 130. However, the suction hole 131 may be formed near an outer periphery of the bottom portion 130a of the cover 130. In this case, a length of a path of the cooling air W2, which flows into the cover 130 through the suction hole 131 and reaches the suction hole 144, becomes longer, and the cooling air W2 can cool more members. Moreover, the suction hole 131 may be formed in the cylindrical portion 130b of the cover 130. In this case, the cooling air W2, which flows into the cover 130 through the suction hole 131, flows along a surface of the heat sink 140 that faces the rear bracket 2, and flows into the rear bracket 2 through the inlet port 21. According to the above-described structure, members connected to the heat sink 140 can be cooled efficiently.

In the related art, because a control unit is separated from a rotary electric machine main body, a gap is formed between a cover of the control unit and a rear housing of the rotary electric machine main body. Then, a foreign substance such as a screw may enter through the gap, go through a space between a heat sink of the control unit and the rear housing from the gap, and go through the ventilation hole of the rear housing, and reach a rotating part in the rotary electric machine main body. Thus, a member such as a fan may be damaged.

In the first example, the insert-molded article 210, in which the bus bar 212, electrically connecting the stator winding 32 to the electric power supplying device 300, is integrated with the molded resin 211, blocks the gap between the opening edge portion of the cylindrical portion 130b of the cover 130 and the rear bracket 2. According to the above-described structure, a foreign substance such as a screw is prevented from entering the cover 130 and flowing into the rear bracket 2 through the inlet port 21. That is, the insert-molded article 210 configures a blocking member.

In the first example, the gap between the opening edge portion of the cylindrical portion 130b of the cover 130 and the rear bracket 2 is blocked with the insert-molded article 210, in which the bus bar 212 is integrated with the molded resin 211. Thus, there is no need to newly prepare a blocking member.

Furthermore, in the first example, near the exhaust port 22, a gap between the opening edge portion of the cylindrical portion 130b of the cover 130 and the rear bracket 2 is blocked. Moreover, the suction hole 131 is provided near the center of the bottom portion 130a of the cover 130 at a position apart far from the exhaust port 22. Thus, the cooling air W2, which was heated and exhausted from the exhaust port 22, is prevented from entering again into the cover 130 and degrading the cooling performance for the rotary electric machine main body 200 and the electric power supplying device 300. In order to prevent the cooling air W2, which was heated, from entering again into the cover 130, the suction hole 131 is preferably formed in the bottom portion 130a of the cover 130. More preferably, the suction hole 131 is formed near the center of the bottom portion 130a of the cover 130.

Because the gap between the cover 130 and the rear bracket 2 is blocked by the insert-molded article 210, in which the bus bar 212 is integrated with molded resin 211, it is not necessary to provide in the heat sink 140 a projection portion for preventing a foreign substance from entering. According to the above-described structure, the surface of the heat sink 140 on the rear bracket 2 side can be made flat, and the gap between the heat sink 140 and the rear bracket 2 can be made small. Thus, the axial length of the rotary electric machine can be made shorter, the weight of the rotary electric machine can be made smaller, and mountability of the rotary electric machine in a vehicle can be enhanced. Moreover, a weight of the heat sink 140 can be made smaller, and the cost regarding the rotary electric machine can be reduced. Furthermore, because the length of the bus bar 212 becomes smaller, electric resistance of the bus bar 212 becomes lower, and an amount of heat generated from the bus bar 212 can be reduced. Thus, heat dissipation can be suppressed. Furthermore, according to the flat surface of the heat sink 140, a pressure loss in the heat sink 140 can be made smaller. Thus, an amount of the cooling air W2 can be increased, and the temperature rise in the heating component is suppressed.

When the cover 130 is made of metal, a noise entering the electric power supplying device 300 can be reflected or absorbed. According to the above-described configuration, an influence from an external noise on the rotary electric machine can be reduced. Moreover, the cover 130 can reflect or absorb a noise from the electric power supplying device 300, and thereby reduce an influence from the noise on the peripheral devices. Furthermore, because the bus bar 212 made of metal blocks the gap between the cover 130 and the rear bracket 2, an effect of further reducing the influence from noise can be obtained. Because the insert-molded article 210, in which the bus bar 212 is integrated with molded resin 211, comes into contact with the cover 130, a heat from the bus bar 212 can be dissipated effectively via the cover 130.

When the stator winding 32 in the rotary electric machine main body 200 includes a plurality of phases of windings, a plurality of bus bars 212 are provided corresponding to a number of phases of the windings. In this case, the bus bars 212 having different electric angle phases are preferably integrated in the same insert-molded article 210. According to the above-described configuration, i.e. the bus bars 212 having different electric angle phases are integrated in the same insert-molded article 210, peak timings of heating in the respective bus bars 212 integrated in the insert-molded article 210 are dispersed. Thus, a temperature rise in the respective bus bars 212 integrated in the insert-molded article 210 is suppressed. Particularly, when electric angle phase difference is 90°, the peak timings of the heating are dispersed the most, and the temperature becomes temporally uniform. Thus, the bus bars 212 having the electric angle phase difference of 90° are preferably integrated in the same insert-molded article 210.

In the first example, the insert-molded article 210, in which the bus bars 212 are integrated with the molded resin 211, is attached to the rear bracket 2. However, the insert-molded article 210 may be attached to the heat sink 140.

Moreover, when the insert-molded article 210 protrudes outwardly in the radial direction from the cover 130, a foreign substance can be prevented from entering into the cover 130 more effectively.

Furthermore, when the gap between the cylindrical portion 130b of the cover 130 and the rear bracket 2 is blocked by the insert-molded article 210, only a part through which a foreign substance can enter may be blocked. However, preferably the gap is blocked over the entire periphery of the cylindrical portion 130b.

### Second example

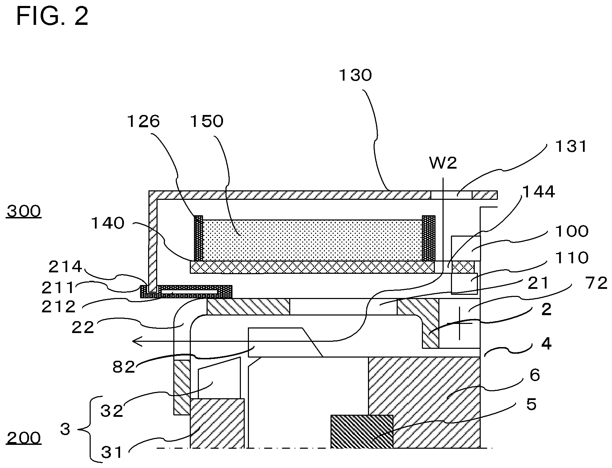

FIG. 2 is a diagram depicting a cross section of a main part of a rotary electric machine according to a second example explaining the background and not being part of the invention.

FIG. 2 shows that the opening edge portion of the cylindrical portion 130b of the cover 130 is inserted in a groove formed in the molded resin 211 of the insert-molded article 210, in a region connecting the insert-molded article 210 with the cover 130.

Other configurations are the same as those in the first example.

The rotary electric machine according to the second example has a Labyrinth structure, in which the opening edge portion of the cylindrical portion 130b of the cover 130 is inserted in the groove 214 formed in the molded resin 211 of the insert-molded article 210. Thus, a foreign substance can be prevented from entering in the cover 130, also in the rotary electric machine according to the second example.

### Third example

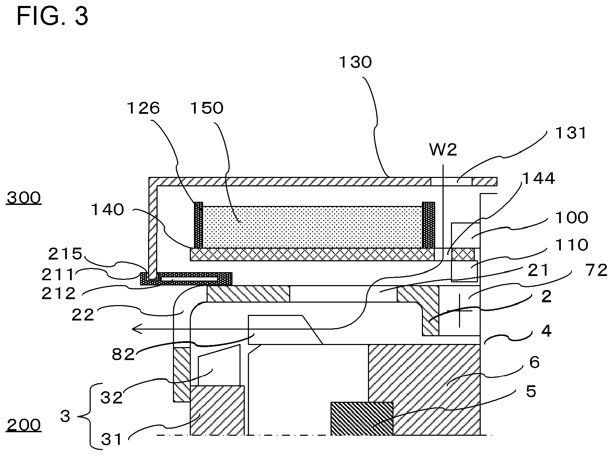

FIG. 3 is a diagram depicting a cross section of a main part of a rotary electric machine according to a third example explaining the background and not being part of the invention.

FIG. 3 shows that a filler 215, such as an adhesive tape or adhesive agent, is filled in a groove 214, in which the opening edge portion of the cylindrical portion 130b of the cover 130 is inserted.

Other configurations are the same as those in the second example.

In the rotary electric machine according to the third example, the filler 215 is filled in the groove 214, in which the opening edge portion of the cylindrical portion 130b of the cover 130 is inserted. Thus, according to the third example, even a small foreign substance can be prevented from entering in the cover 130.

### Fourth example

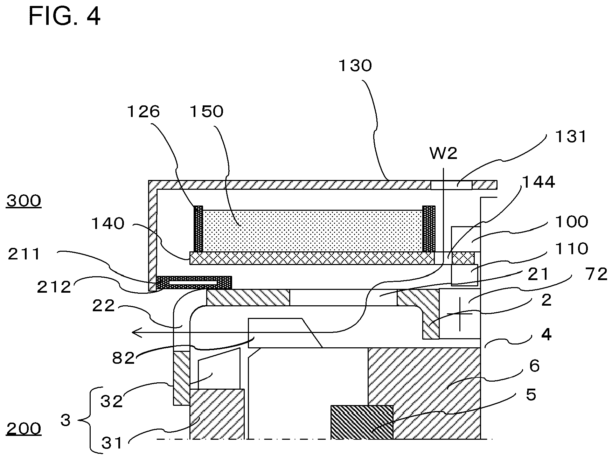

FIG. 4 is a diagram depicting a cross section of a main part of a rotary electric machine according to a fourth example explaining the background and not being part of the invention.

FIG. 4 shows that the insert-molded article 210, in which the bus bar 212 is integrated with the molded resin 211, comes into contact with an inner circumferential wall surface of the cylindrical portion 130b of the cover 130.

Other configurations are the same as those in the first example.

In the rotary electric machine according to the fourth example, the insert-molded article 210 comes into contact with the inner peripheral wall surface of the cylindrical portion 130b of the cover 130, to block the gap between the cover 130 and the rear bracket 2. Thus, a foreign substance can be prevented from entering in the cover 130, also in the rotary electric machine according to the fourth example.

Even in the case where a size of the electric power supplying device increases due to adding functions, it is not necessary to cause the insert-molded article 210 to protrude from the cover 130 outwardly in the radial direction, and the gap between the cover 130 and the rear bracket 2 can be blocked effectively.

### Embodiment of the present invention

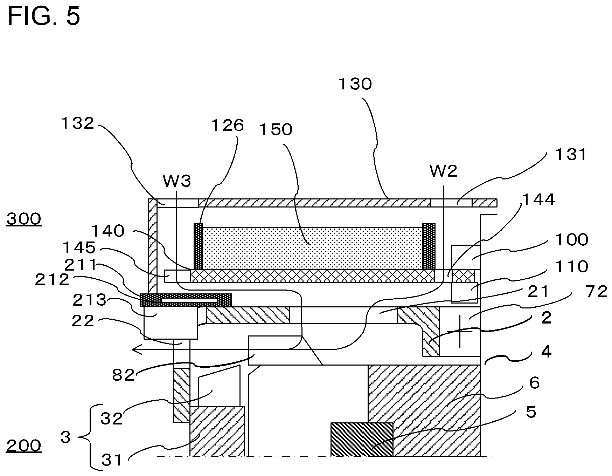

FIG. 5 is a diagram depicting a cross section of a main part of a rotary electric machine according to an embodiment of the present invention.

FIG. 5 shows that a suction hole 132 is formed near an outer periphery of the bottom portion 130a of the cover 130. A plurality of heat sink radiation fins 145 are arranged on the heat sink 140 in the circumferential direction. Each of the heat sink radiation fins 145 having a small thickness in the circumferential direction extends from an outer diameter side end surface of the heat sink 140 outwardly in the radial direction. The suction hole 132 faces the heat sink radiation fins 145 in the axial direction. A plurality of bus bar radiation fins 213 are arranged on the bus bars 212 in the circumferential direction. Each of the bus bar radiation fins 213 having a small thickness in the circumferential direction extends from the bus bar 212, passing through the molded resin 21, toward the front side in the axial direction. A part of the bus bar radiation fins 213 enters the exhaust port 22. According to the above-described configuration, the bus bar radiation fin 213 is exposed to cooling air to be exhausted from the exhaust port 22.

Other configurations are the same as those in the first example.

In the rotary electric machine according to the embodiment, the insert-molded article 210 comes into contact with the opening edge portion of the cylindrical portion 130b of the cover 130, to block the gap between the cover 130 and the rear bracket 2. Thus, a foreign substance can be prevented from entering in the cover 130, also in the rotary electric machine according to the embodiment.

In the rotary electric machine according to the embodiment, because the suction hole 131 and the suction hole 132 are formed near the center and near the outer periphery of the bottom portion 130a of the cover 130, respectively, amounts of the cooling air W2 and the cooling air W3 increase, and thereby the heating components can be cooled effectively.

The suction hole 132 is formed near the outer periphery of the bottom portion 130a of the cover 130, and the heat sink radiation fin 145 protrudes from the outer diameter side end surface of the heat sink 140 outwardly in the radial direction. According to the above-described configuration, the heat sink radiation fin 145 is located on a ventilation path of the cooling air W3 sucked from the suction hole 132, and heat generated from the heating components can be radiated effectively to the cooling air W3 via the heat sink radiation fin 145. Moreover, because the insert-molded article 210 including the bus bar 212 is located on the ventilation path of the cooling air W3 sucked from the suction hole 132, heat generated from the bus bar 212 can be radiated effectively.

Because the bus bar radiation fin 213 is exposed to the cooling air W2 and the cooling air W3 to be exhausted from the exhaust port 22, heat from the bus bar 212 can be radiated effectively.

Because the bus bar radiation fin 213 can be formed integrally with the bus bar 212 when the bus bar 212 is formed, it is not necessary to add a process of forming the bus bar radiation fin 213 to the process of forming the insert-molding article.

The heat sink radiation fin 145 may be formed over the entire periphery of the heat sink 140, or partially so as to correspond to positions of the heating components to be cooled.

Moreover, in the embodiment, the bus bar radiation fin 213 is made of the same material as the bus bar 212, and formed integrally with the bus bar 212. However, the bus bar radiation fin 213 may be made of the same material as the molded resin 211 and formed integrally with the molded resin 211.

### Fifth example

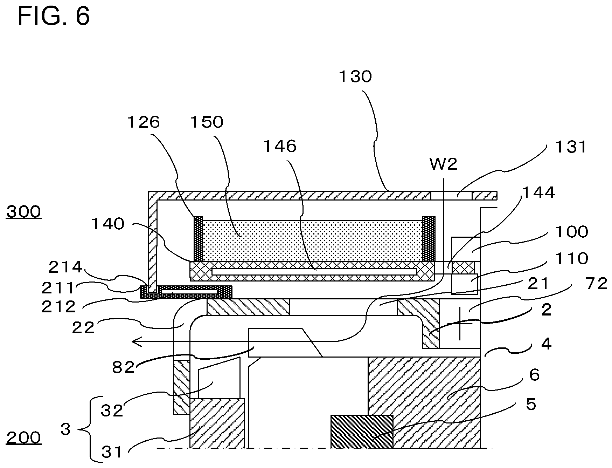

FIG. 6 is a diagram depicting a cross section of a main part of a rotary electric machine according to a fifth example explaining the background and not being part of the invention.

FIG. 6 shows a flow passage 146, in which liquid refrigerant is distributed, formed in the heat sink 140.

Other configurations are the same as those in the second example.

The rotary electric machine according to the fifth example has the Labyrinth structure, in which the opening edge portion of the cylindrical portion 130b of the cover 130 is inserted in the groove 214 formed in the insert-molded article 210. Thus, a foreign substance can be prevented from entering in the cover 130, also in the rotary electric machine according to the fifth example.

Because the flow passage 146, in which liquid refrigerant is distributed, is formed in the heat sink 140 in the rotary electric machine according to the fifth example, even when a great amount of heat is generated in the electric power supplying device 300, heat from the heat sink 140 can be radiated effectively.

In the fifth example, the flow passage 146 is formed in the heat sink 140 in the rotary electric machine according to the second example. However, the flow passage 146 may be formed in the heat sink 140 in the rotary electric machine according to any one of the other examples or according to an embodiment of the present invention.

In the above-described embodiment and examples, a claw pole type rotor having field windings as magnetic field means is employed. However, a permanent magnet embedded type rotor having permanent magnets as magnetic field means may be employed.

Moreover, in the above-described embodiment and examples, the insert-molded article of the bus bar is used for the blocking member.

Moreover, in the above-described embodiment and examples, the rotary electric machine main body that operates as an electric motor has been described. However, the rotary electric machine main body may operate as a generator.

The embodiment of the present invention has been described in detail.

### Reference Signs List

1 front bracket (load-side bracket), 2 rear bracket (anti-load side bracket), 3 stator, 6 rotor, 21 inlet port, 22 exhaust port, 82 fan, 130 cover, 130a bottom portion, 130b cylindrical portion, 140 heat sink, 145 heat sink radiation fin, 146 flow passage, 150 inverter circuit unit, 200 rotary electric machine main body, 210 insert-molded article, 211 molded resin, 212 bus bar, 213 bus bar radiation fin, 214 groove, 300 electric power supplying device (electric power conversion device)

## Claims

1. A rotary electric machine, comprising:
a rotary electric machine main body (200); and
an electric power conversion device (300) integrated with the rotary electric machine main body (200), and located so that the rotary electric machine main body (200) and the electric power conversion device (300) are arranged in one line along an axial direction,
wherein the rotary electric machine main body (200) includes
a housing having a load side bracket (1) and an anti-load side bracket (2),
a rotor (6) rotatably arranged in the housing,
a fan (82) fixed at an end portion of the rotor on an anti-load side in the axial direction, and
a stator (3) held in the housing and arranged coaxially with the rotor (6) and on an outer diameter side of the rotor (6),
the electric power conversion device (300) is arranged outside the anti-load side bracket (2) in the axial direction, so as to face the anti-load side bracket (2) and attached to the anti-load side bracket (2), the electric power conversion device (300) including a cover (130) having a bottom portion (130a) and a cylindrical portion (130b),
an inlet port (21) is formed in the anti-load side bracket (2) within a region that faces the rotor (6) in the axial direction,
an exhaust port (22) is formed in the anti-load side bracket (2) within a region outside the fan (82) in a radial direction, and
a blocking member (210) is provided so as to block a gap between the cover (130) and the anti-load side bracket (2);
wherein the blocking member (210) is an insert-molded article including a bus bar (212), which electrically connects a stator winding (32) of the stator (3) to the electric power conversion device (300);
**characterized in that** the insert-molded article (210) is arranged so as to be exposed to cooling air to be exhausted from the exhaust port (22);
wherein the insert-molded article (210) includes a bus bar radiation fin (213) protruding from the bus bar (212) or from a molded resin (211) included in the insert-molded article (210), and
the bus bar radiation fin (213) is arranged so as to be exposed to the cooling air to be exhausted from the exhaust port (22).

2. The rotary electric machine according to claim 1, wherein
the blocking member (210) is fixed to the anti-load side bracket (2) in a state where the blocking member (210) comes into contact with the cylindrical portion (130b) of the cover (130).

3. The rotary electric machine according to claim 2, wherein
the blocking member (210) comes into contact with an end surface of the cylindrical portion (130b) of the cover (130) on a side of the anti-load side bracket (2).

4. The rotary electric machine according to claim 3, wherein
an opening edge portion of the cylindrical portion (130b) of the cover (130) is inserted in a groove formed in the blocking member (210) .

5. The rotary electric machine according to claim 2, wherein
the blocking member (210) comes into contact with an inner circumferential wall surface of the cylindrical portion (130b) of the cover (130).

6. The rotary electric machine according to any one of claims 1 to 5, wherein
the blocking member (210) is adhered to the cover (130).

7. The rotary electric machine according to any one of claims 1 to 6, wherein
an opening edge portion of the cylindrical portion (130b) of the cover (130) is arranged outside the anti-load side bracket (2) in the radial direction.

8. The rotary electric machine according to claim 1, wherein
the bus bar (212) includes a plurality of bus bars, to which currents having different phases are applied.

9. The rotary electric machine according to claim 8, wherein
a phase difference in the currents applied to the plurality of bus bars (212) is 90°.

10. The rotary electric machine according to any one of claims 1 to 9, wherein
the electric power conversion device (300) includes a heat sink (140) which is arranged outside the anti-load side bracket (2) in the axial direction so as to face the anti-load side bracket (2), and
a surface of the heat sink (140) that faces the anti-load side bracket (2) is flat.

11. The rotary electric machine according to claim 10, wherein
the heat sink (140) includes a heat sink radiation fin (145) which protrudes outwardly from the heat sink (140) in the radial direction, and
a suction hole (132) is formed in the bottom portion (130a) of the cover (130) within a region that faces the heat sink radiation fin (145).

12. The rotary electric machine according to claim 10 or 11, wherein
a flow passage (146) for liquid refrigerant is formed in the heat sink (140).

13. The rotary electric machine according to any one of claims 1 to 12, wherein
the cover (130) is made of metal.

## Patentansprüche

1. Eine elektrische Rotationsmaschine, umfassend:
einen elektrischen Rotationsmaschinenhauptkörper (200); und
eine elektrische Leistungsumwandlungsvorrichtung (300), die in den elektrischen Rotationsmaschinenhauptkörper (200) integriert und so angeordnet ist, dass der elektrische Rotationsmaschinenhauptkörper (200) und die elektrische Leistungsumwandlungsvorrichtung (300) in einer Linie entlang einer axialen Richtung angeordnet sind,
wobei der elektrische Rotationsmaschinenhauptkörper (200) enthält
ein Gehäuse mit einer lastseitigen Halterung (1) und einer antilastseitigen Halterung (2),
einen Rotor (6), der drehbar in dem Gehäuse angeordnet ist,
einen Lüfter (82), der an einem Endabschnitt des Rotors auf einer Antilastseite in axialer Richtung befestigt ist, und
einen Stator (3), der in dem Gehäuse gehalten wird und koaxial mit dem Rotor (6) und an einer Außendurchmesserseite des Rotors (6) angeordnet ist,
die elektrische Leistungsumwandlungsvorrichtung (300) in der axialen Richtung außerhalb der antilastseitigen Halterung (2) angeordnet ist, so dass sie der antilastseitigen Halterung (2) zugewandt und an der antilastseitigen Halterung (2) befestigt ist, wobei die elektrische Leistungsumwandlungsvorrichtung (300) eine Abdeckung (130) mit einem Bodenabschnitt (130a) und einem zylindrischen Abschnitt (130b) aufweist,
eine Einlassöffnung (21) in der antilastseitigen Halterung (2) in einem Bereich geformt ist, der dem Rotor (6) in der axialen Richtung zugewandt ist,
eine Auslassöffnung (22) in der antilastseitigen Halterung (2) in einem Bereich außerhalb des Lüfters (82) in einer radialen Richtung geformt ist, und
ein Blockierelement (210) so vorgesehen ist, dass es einen Spalt zwischen der Abdeckung (130) und der antilastseitigen Halterung (2) blockiert;
wobei das Blockierelement (210) ein umgespritzter Artikel ist, der eine Sammelschiene (212) enthält, die eine Statorwicklung (32) des Stators (3) elektrisch mit der elektrischen Leistungsumwandlungsvorrichtung (300) verbindet;
**dadurch gekennzeichnet, dass** der umgespritzte Artikel (210) so angeordnet ist, dass er Kühlluft ausgesetzt ist, die aus der Auslassöffnung (22) abgeleitet wird;
wobei der umgespritzte Artikel (210) eine Sammelschienenstrahlungsrippe (213) aufweist, die von der Sammelschiene (212) oder von einem in dem umgespritzten Artikel (210) enthaltenen geformten Harz (211) vorsteht, und
die Sammelschienenstrahlungsrippe (213) so angeordnet ist, dass sie der Kühlluft ausgesetzt ist, die aus der Auslassöffnung (22) abgeleitet wird.

2. Die elektrische Rotationsmaschine nach Anspruch 1, wobei
das Blockierelement (210) an der antilastseitlichen Halterung (2) in einem Zustand befestigt ist, in dem das Sperrelement (210) mit dem zylindrischen Abschnitt (130b) der Abdeckung (130) in Kontakt kommt.

3. Die elektrische Rotationsmaschine nach Anspruch 2, wobei
das Blockierelement (210) in Kontakt mit einer Endfläche des zylindrischen Abschnitts (130b) der Abdeckung (130) auf einer Seite der antilastseitigen Halterung (2) kommt.

4. Die elektrische Rotationsmaschine nach Anspruch 3, wobei
ein Öffnungsrandabschnitt des zylindrischen Abschnitts (130b) der Abdeckung (130) in eine in dem Sperrelement (210) geformte Nut eingesetzt ist.

5. Die elektrische Rotationsmaschine nach Anspruch 2, wobei
das Blockierelement (210) mit einer inneren umlaufenden Wandfläche des zylindrischen Abschnitts (130b) des Deckels (130) in Kontakt kommt.

6. Die elektrische Rotationsmaschine nach einem der Ansprüche 1 bis 5, wobei
das Blockierelement (210) an der Abdeckung (130) angeklebt ist.

7. Die elektrische Rotationsmaschine nach einem der Ansprüche 1 bis 6, wobei
ein Öffnungsrandabschnitt des zylindrischen Abschnitts (130b) der Abdeckung (130) in radialer Richtung außerhalb der antilastseitigen Halterung (2) angeordnet ist.

8. Die elektrische Rotationsmaschine nach Anspruch 1, wobei
die Sammelschiene (212) eine Vielzahl von Sammelschienen umfasst, an die Ströme mit unterschiedlichen Phasen angelegt werden.

9. Die elektrische Rotationsmaschine nach Anspruch 8, wobei
eine Phasendifferenz in den Strömen, die an die Vielzahl von Sammelschienen (212) angelegt werden, 90° beträgt.

10. Die elektrische Rotationsmaschine nach einem der Ansprüche 1 bis 9, wobei
die elektrische Leistungsumwandlungsvorrichtung (300) einen Kühlkörper (140) enthält, der in axialer Richtung außerhalb der antilastseitigen Halterung (2) angeordnet ist, so dass er dem antilastseitigen Halterung (2) zugewandt ist, und
eine Oberfläche des Kühlkörpers (140), die der antilastseitigen Halterung (2) zugewandt ist, eben ist.

11. Die elektrische Rotationsmaschine nach Anspruch 10, wobei
der Kühlkörper (140) eine Kühlkörperstrahlungsrippe (145) enthält, die von dem Kühlkörper (140) in radialer Richtung nach außen ragt, und
ein Ansaugloch (132) in dem unteren Abschnitt (130a) der Abdeckung (130) in einem Bereich geformt ist, der der Kühlkörperstrahlungsrippe (145) gegenüberliegt.

12. Die elektrische Rotationsmaschine nach Anspruch 10 oder 11, wobei
ein Strömungskanal (146) für flüssiges Kältemittel in dem Kühlkörper (140) geformt ist.

13. Die elektrische Rotationsmaschine nach einem der Ansprüche 1 bis 12, wobei
die Abdeckung (130) aus Metall gefertigt ist.

## Revendications

1. Machine électrique rotative comprenant :
un corps principal de machine électrique rotative (200) ; et
un dispositif de conversion d'énergie électrique (300) intégré au corps principal de machine électrique rotative (200) et positionné de manière que le corps principal de machine électrique rotative (200) et le dispositif de conversion d'énergie électrique (300) soient disposés en ligne suivant une direction axiale,
dans laquelle le corps principal de machine électrique rotative (200) inclut
un boîtier présentant un support côté charge (1) et un support côté anti-charge (2),
un rotor (6) disposé de manière rotative dans le boîtier,
un ventilateur (82) fixé à une partie d'extrémité du rotor sur un côté anti-charge dans la direction axiale, et
un stator (3) maintenu dans le boîtier et disposé de manière coaxiale avec le rotor (6) et sur un côté diamètre extérieur du rotor (6),
le dispositif de conversion d'énergie électrique (300) est disposé à l'extérieur du support côté anti-charge (2) dans la direction axiale, de manière à faire face au support côté anti-charge (2) et fixé au support côté anti-charge (2), le dispositif de conversion d'énergie électrique (300) incluant un couvercle (130) présentant une partie inférieure (130a) et une partie cylindrique (130b),
un orifice d'admission (21) est formé dans le support côté anti-charge (2) dans une région qui fait face au rotor (6) dans la direction axiale,
un orifice d'échappement (22) est formé dans le support côté anti-charge (2) dans une région à l'extérieur du ventilateur (82) dans une direction radiale, et
un élément de blocage (210) est disposé de manière à bloquer un espace entre le couvercle (130) et le support côté anti-charge (2) ;
dans laquelle l'élément de blocage (210) est un article moulé par insertion incluant une barre omnibus (212), qui connecte électriquement un enroulement de stator (32) du stator (3) au dispositif de conversion d'énergie électrique (300) ;
**caractérisée en ce que** l'article moulé par insertion (210) est disposé de manière à être exposé à de l'air de refroidissement destiné à être refoulé à partir de l'orifice d'échappement (22) ;
dans laquelle l'article moulé par insertion (210) inclut une ailette de rayonnement de barre omnibus (213) faisant saillie à partir de la barre omnibus (212) ou à partir d'une résine moulée (211) incluse dans l'article moulé par insertion (210), et
l'ailette de rayonnement de barre omnibus (213) est disposée de manière à être exposée à l'air de refroidissement destiné à être refoulé à partir de l'orifice d'échappement (22).

2. Machine électrique rotative selon la revendication 1, dans laquelle
l'élément de blocage (210) est fixé au support côté anti-charge (2) dans un état dans lequel l'élément de blocage (210) vient en contact avec la partie cylindrique (130b) du couvercle (130).

3. Machine électrique rotative selon la revendication 2, dans laquelle
l'élément de blocage (210) vient en contact avec une surface d'extrémité de la partie cylindrique (130b) du couvercle (130) sur un côté du support côté anti-charge (2).

4. Machine électrique rotative selon la revendication 3, dans laquelle
une partie de bord d'ouverture de la partie cylindrique (130b) du couvercle (130) est insérée dans une rainure formée dans l'élément de blocage (210).

5. Machine électrique rotative selon la revendication 2, dans laquelle
l'élément de blocage (210) vient en contact avec une surface de paroi circonférentielle intérieure de la partie cylindrique (130b) du couvercle (130).

6. Machine électrique rotative selon l'une quelconque des revendications 1 à 5, dans laquelle
l'élément de blocage (210) est collé au couvercle (130).

7. Machine électrique rotative selon l'une quelconque des revendications 1 à 6, dans laquelle
une partie de bord d'ouverture de la partie cylindrique (130b) du couvercle (130) est disposée à l'extérieur du support côté anti-charge (2) dans la direction radiale.

8. Machine électrique rotative selon la revendication 1, dans laquelle
la barre omnibus (212) inclut une pluralité de barres omnibus auxquelles sont appliqués des courants présentant des phases différentes.

9. Machine électrique rotative selon la revendication 8, dans laquelle
une différence de phase dans les courants appliqués à la pluralité de barres omnibus (212) est 90°.

10. Machine électrique rotative selon l'une quelconque des revendications 1 à 9, dans laquelle
le dispositif de conversion d'énergie électrique (300) inclut un puits de chaleur (140) qui est disposé à l'extérieur du support côté anti-charge (2) dans la direction axiale de manière à faire face au support côté anti-charge (2), et
une surface du puits de chaleur (140) qui fait face au support côté anti-charge (2) est plate.

11. Machine électrique rotative selon la revendication 10, dans laquelle
le puits de chaleur (140) inclut une ailette de rayonnement de puits de chaleur (145) qui fait saillie vers l'extérieur à partir du puits de chaleur (140) dans la direction radiale, et
un trou d'aspiration (132) est formé dans la partie inférieure (130a) du couvercle (130) dans une région qui fait face à l'ailette de rayonnement de puits de chaleur (145).

12. Machine électrique rotative selon la revendication 10 ou 11, dans laquelle
un passage d'écoulement (146) pour un réfrigérant liquide est formé dans le puits de chaleur (140).

13. Machine électrique rotative selon l'une quelconque des revendications 1 à 12, dans laquelle
le couvercle (130) est réalisé en métal.
